# EUROPÄISCHE PATENTSCHRIFT

(11) **EP 3 176 606 B1**
(45) Veröffentlichungstag und Bekanntmachung des Hinweises auf die Patenterteilung: **31.07.2019**
(21) Anmeldenummer: 16194669.4
(22) Anmeldetag: 19.10.2016
(51) Int. Cl.: G01S 17/42, G01S 7/497

(54) **VERFAHREN ZUM AUSRICHTEN EINES LASERSCANNERS**
METHOD FOR ALIGNING A LASER SCANNER
PROCÉDÉ DESTINÉ À L'ALIGNEMENT D'UN SCANNER LASER

(30) Priorität: 16.11.2015 DE 102015119707
(43) Veröffentlichungstag der Anmeldung: 07.06.2017
(73) Patentinhaber: SICK AG, 79183 Waldkirch/Breisgau (DE)
(72) Erfinder: Weber, Harald, 77855 Achern (DE); Schopp, Thomas, 79112 Freiburg (DE); Ruck, Stefan, 79312 Emmendingen (DE)
(74) Vertreter: Manitz Finsterwald Patent- und Rechtsanwaltspartnerschaft mbB

(56) Entgegenhaltungen:
- WO-A1-2012/048420
- DE-A1- 10 122 664
- DE-A1- 10 217 295
- DE-A1-102012 100 324
- DE-B3-102012 102 651
- DE-B4- 19 902 287
- US-A1- 2005 219 530

## Beschreibung

Die vorliegende Erfindung betrifft ein Verfahren zum Ausrichten eines Laserscanners, dessen Ausrichtung mittels einer Verstellvorrichtung zumindest um eine Nickachse und eine Rollachse veränderbar ist.

Mit Hilfe von Laserscannern können zwei- oder dreidimensionale Bereiche eines Raumes überwacht, vermessen oder abgebildet werden. Hierzu wird ein Laserstrahl mittels einer Scanvorrichtung zumeist zyklisch in verschiedene Raumwinkel abgelenkt. Das von abgetasteten Objekten reflektierte oder remittierte Licht wird durch geeignete Sensoren erfasst. Als Scanvorrichtungen werden zum Beispiel rotierende Spiegel oder Prismen verwendet. Das von Laserscannern benutzte Licht kann im sichtbaren oder auch im nicht sichtbaren Wellenlängenbereich (Ultraviolett- oder Infrarotbereich) liegen.

Vor der Benutzung eines Laserscanners ist es in der Regel erforderlich, diesen präzise im Raum auszurichten. Neben der translatorischen Positionierung, die in der Regel relativ einfach zu bewerkstelligen ist, ist auch eine rotatorische Ausrichtung um die drei Freiheitsgrade (x-, y- und z-Achse eines kartesischen Koordinatensystems) notwendig. Gemäß einer gebräuchlichen Konvention bildet bei einem Laserscanner, bei dem der Abtaststrahl rotierend innerhalb einer Scanebene abgelenkt wird, die Scanachse, d.h. die Achse um die der Laserstrahl rotiert, die z-Achse, die auch als Hochachse oder Gierachse bezeichnet wird. Da der Scanwinkel in der Regel begrenzt ist (z.B. auf 270°), wird die Achse, die den sektorförmigen Abtastbereich in der Mitte teilt, als x-Achse definiert. Die x-Achse entspricht sozusagen der "Blickrichtung" des Laserscanners und wird auch als Rollachse bezeichnet. Die y-Achse verläuft senkrecht zur x- und z-Achse und wird auch als Nickachse bezeichnet.

Während die Ausrichtung bezüglich der Hochachse in der Regel unkritisch ist und beispielsweise mittels am Laserscanner vorgesehener Markierungen oder durch eine elektronische Festlegung des Scanbereichs vorgenommen werden kann, gestaltet sich die Ausrichtung des Laserscanners bezüglich der Nick- und Rollachse aufwändiger. So ist zum Beispiel eine Ausrichtung des Laserscanners mittels einer Wasserwaage bekannt. Hierbei ist die erzielbare Genauigkeit jedoch oftmals nicht ausreichend. Zudem muss an dem Laserscanner eine ausreichend große, plane Bezugsfläche vorhanden sein, was Einschränkungen bei der Bauform und -größe nach sich zieht. Außerdem ist mittels einer Wasserwaage lediglich eine horizontale Ausrichtung möglich, sofern nicht weitere Hilfsmittel (Keile o.ä.) zu Hilfe genommen werden.

Bei einem Verfahren zur Justage eines Laserscanner-Sensors gemäß DE 199 02 287 B4 wird zur Justage des Nickwinkels eine Lichtlaufzeitmessung der Entfernung von definiert geformten und positionierten Volumenkörpern durchgeführt, wobei der Volumenkörper derart geformt und angeordnet ist, dass die Messung einen Extremwert der Laufzeit ergibt, wenn der gewünschte Nickwinkel vorliegt.

DE 102 17 295 A1 beschreibt die Ausrichtung eines an einem Kraftfahrzeug angebrachten Laserscanners, bei dem das Fahrzeug entlang einer Prüfbahn bewegt wird und die Abtastlinie entlang einer Prüffläche durch dort vorgesehene Erfassungseinrichtungen erfasst wird um die Abtastebene des Scanners zu ermitteln wird.

DE 101 22 664 A1 beschreibt die Kalibrierung eines an einem Fahrzeug angebrachten Laserscanners unter Verwendung von für den Scanner erkennbar unterschiedlicher Objekte, die um das Fahrzeug herum angeordnet werden und eine Kalibrierung in der x-y-Ebene erlauben. Zur Kalibrierung in der Vertikalen werden zwei übereinander angeordnete Detektoren eingesetzt, die den Laserstrahl je nach Orientierung der Abtastebene detektieren.

DE 10 2012102 651 B3 offenbart eine Prüfvorrichtung und ein Prüfverfahren für ein Verkehrsüberwachungsgerät mit einem Laserscanner. Gegenstand der Prüfungen ist unter anderem auch die Überprüfung einer vertikalen Winkellage und Höhe der Scanebene des Laserscanners, was einer Überprüfung der Ausrichtung um eine Roll- bzw. Nickachse entspricht. Hierfür wird ein als Messtafel bezeichnetes Referenzobjekt verwendet, welches u.a. mehrere vertikal verlaufende, seitlich voneinander beabstandete Markierungen aufweist. Zusätzlich zu den Vertikallinien ist auch eine Diagonallinie vorhanden. Bei der Abtastung der Diagonallinie ergibt sich aufgrund der elliptischen Form des Abtaststrahls im Abtastmuster ein Trapezprofil, wobei aus einer seitlichen Verschiebung dieses Trapezprofils auf eine Abweichung der Höhenlage des Scanstrahls und aus einer Streckung oder Stauchung der Breite dieses Trapezprofils auf eine Abweichung des Scanlinie aus der Horizontalen, also eine seitliche Verkippung der Scanebene, geschlossen werden kann.

DE 10 2012 100 324 A1 betrifft einen Staubsauger-Roboter mit einem Laserscanner, dessen Abtaststrahl gegenüber der Horizontalen geneigt ist, so dass verschiedene Codierungsbereiche eine an einer Basisstation angebrachten Codierung in Abhängigkeit von der Entfernung des Geräts zur Basisstation abgetastet werden. Die übereinander angeordneten Codierungsbereiche weisen jeweils mehrere vertikal verlaufende Streifen auf, die sich hinsichtlich ihrer Breite und Abstände voneinander unterscheiden. Dadurch kann eine Navigation zur korrekten Annäherung an die Basisstation erfolgen.

Es ist die Aufgabe der Erfindung, ein Verfahren zum Ausrichten eines Laserscanners anzugeben, das zuverlässig, einfach zu handhaben und kostengünstig in der Anwendung ist.

Die Lösung der Aufgabe erfolgt durch ein Verfahren mit den Merkmalen des Anspruchs 1. Erfindungsgemäß ist ein Verfahren zum Ausrichten eines Laserscanners, dessen Ausrichtung mittels einer Verstellvorrichtung zumindest um eine Nickachse und eine Rollachse veränderbar ist, vorgesehen, bei dem
- ein Referenzobjekt innerhalb eines Abtastbereiches des Laserscanners angeordnet wird, wobei das Referenzobjekt mehrere streifenartige, durch den Laserscanner detektierbare Markierungen aufweist, welche quer zu einer Referenzlinie verlaufen und in Richtung der Referenzlinie voneinander beabstandet sind,
- das Referenzobjekt mittels des Laserscanners abgetastet wird, um ein Abtastmuster des Referenzobjekts zu erzeugen, wobei die Form und/oder die Anordnung der Markierungen derart gewählt sind, dass anhand der Gestalt des erzeugten Abtastmusters erkannt wird, ob die Ausrichtung des Laserscanners mit einer gewünschten Ausrichtung übereinstimmt, oder ob die Ausrichtung des Laserscanners von der gewünschten Ausrichtung abweicht, und
- die Ausrichtung des Laserscanners auf der Grundlage einer erkannten Abweichung der Ausrichtung verändert wird.

Für die Durchführung des erfindungsgemäßen Verfahrens werden außer dem sehr einfach ausgestalteten Referenzobjekt keine weiteren technischen Hilfsmittel benötigt. Wesentlicher Bestandteil des Referenzobjekts sind die Markierungen, die beispielsweise durch reflektierende und/oder remittierende Materialien, z.B. Klebestreifen, die an einem geeigneten Träger oder Substrat angeordnet sind. Die Markierungen können beispielsweise auf einer Platte, einem Kartonbogen oder dergleichen aufgebracht werden, die oder der innerhalb des Abtastbereiches aufgestellt wird. Es ist aber auch möglich, die Markierungen unmittelbar auf einer im Abtastbereich vorhandenen Wand aufzubringen. Die Art des Kontrastes spielt für das erfindungsgemäße Verfahren grundsätzlich keine Rolle. Auch wenn nachfolgend von Markierungen ausgegangen wird, die das Licht stärker reflektieren als der umgebende Bereich, können auch Markierungen verwendet werden, die einen umgekehrten Kontrast liefern, z.B. schwarze Markierungen an einer weißen Wand. Die Markierungen müssen für eine ordnungsgemäße Durchführung des Verfahrens quer zur Referenzlinie verlaufen, wobei ein rechter Winkel zwischen den Markierungen und der Referenzlinie zwar der einfachen Auswertung wegen besonders vorteilhaft, aber nicht zwingend erforderlich ist. Abweichungen von der Senkrechten von einigen Grad, z.B. bis etwa 10° bis 20°, können bei entsprechender Berücksichtigung bei der Auswertung toleriert werden.

Das Erkennen, ob eine Abweichung oder eine Übereinstimmung zwischen der ermittelten und der gewünschten Ausrichtung vorliegt, kann beispielsweise mithilfe eines Vergleichs zwischen dem erfassten Abtastmuster und einem Referenzmuster erfolgen, wobei die Ausrichtung des Laserscanners einer gewünschten Ausrichtung entspricht, wenn das erfasste Abtastmuster dem Referenzmuster entspricht. Eine Entsprechung zwischen dem erzeugten Abtastmuster und dem Referenzmuster liegt in diesem Sinne nicht nur dann vor, wenn die beiden Muster identisch sind, sondern auch dann, wenn die Muster geometrisch ähnlich zueinander sind, z.B. wenn die Verhältnisse der Abstände zwischen verschiedenen Markierungen im Abtastmuster den entsprechenden Verhältnissen im Referenzmuster entsprechen. Dadurch ist es möglich, das erfindungsgemäße Verfahren auch bei unterschiedlichen Abständen zwischen dem Laserscanner und dem Referenzobjekt einzusetzen.

Weiterhin kann das Erkennen, ob eine Abweichung oder eine Übereinstimmung zwischen der ermittelten und der gewünschten Ausrichtung vorliegt, auch anhand von innerhalb des Abtastmusters vorhandenen Informationen erfolgen, z.B. mittels eines Vergleichs verschiedener erfasster Markierungen bezüglich bestimmter Merkmale, welche beispielsweise geometrische Charakteristika oder Helligkeitsunterschiede umfassen. Unter dem Begriff "erfasste Markierung" wird hier eine Struktur im Abtastmuster verstanden, welche die zugehörige Markierung repräsentiert.

Die gewünschte Ausrichtung des Laserscanners wird im Wesentlichen durch die Position und die Ausrichtung des Referenzobjekts bestimmt. So ist es durch geeignete Anbringung des Referenzobjekts möglich, den Laserscanner auch so auszurichten, dass dessen Scanebene um die Nick- und/oder Rollachse gegenüber einer horizontalen Fläche geneigt ist.

Die tatsächliche Ausrichtung des Laserscanners kann dann zum Beispiel manuell erfolgen, indem auf dem Abtastmuster beruhende Benutzeranweisungen ausgegeben werden und ein Benutzer mittels der Verstellvorrichtung die entsprechenden Veränderungen der Ausrichtung durchführt. Im einfachsten Fall können die Benutzeranweisungen darin bestehen, dass das Abtastmuster mittels einer geeigneten Anzeigevorrichtung wiedergegeben wird, so dass der Benutzer die notwendige Verstellung erkennt. Alternativ kann auch eine Verstellvorrichtung für eine automatische Verstellung vorgesehen sein, die mit einer Auswerteeinheit verbunden ist, die auf Grund einer Auswertung des Abtastmusters gegebenenfalls erforderliche Verstellbewegungen ermittelt und an die Verstellvorrichtung übermittelt, die von dieser ausgeführt werden.

Das erfindungsgemäße Verfahren ist prinzipiell nicht auf Laserscanner beschränkt, bei denen sich der Abtaststrahl in einer Ebene bewegt, wie z.B. bei sogenannten Einlagenscannern, sondern kann auch bei anderen Ausgestaltungen, bei denen sich der Abtaststrahl z.B. auf einem Kegelmantel bewegt, oder bei Mehrlagenscannern eingesetzt werden. Da bei einem nicht ebenen Scanbereich abstandsabhängige Verzerrungen des Abtastlinie auftreten können, d.h. die Abtastlinie verläuft nicht in einer Ebene, empfiehlt es sich, ggf. einen Mehrlagenscanner so zu betreiben, dass sich der Abtaststrahl während des Ausrichtens in einer Ebene bewegt.

Erfindungsgemäß sind die Form und/oder die Anordnung der Markierungen derart gewählt, dass anhand der Gestalt des Abtastmusters erkannt wird, ob die Ausrichtung des Laserscanners bezüglich der Nickachse und/oder bezüglich der Rollachse von der gewünschten Ausrichtung abweicht, wobei die Ausrichtung des Laserscanners um diejenige Achse verändert wird, für welche eine Abweichung erkannt wurde, so dass diese Abweichung vermindert oder beseitigt wird. Demnach kann anhand des erkannten Abtastmusters zwischen einer Abweichung des Nickwinkels von einem gewünschten Nickwinkel und einer Abweichung des Rollwinkels von einem gewünschten Rollwinkel differenziert werden. Dies ermöglicht eine zielgerichtete Beseitigung einer etwaig vorhandenen Abweichung der Ausrichtung des Laserscanners von einer gewünschten Ausrichtung.

In dem Zusammenhang hat es sich als vorteilhaft erwiesen, wenn anhand der Gestalt des Abtastmusters auch die Richtung dieser Abweichung und bevorzugt auch der Betrag dieser Abweichung erkannt und insbesondere bei dem Verändern der Ausrichtung der Ausrichtung des Laserscanners berücksichtigt wird. Unter der Richtung der Abweichung wird verstanden, ob sich der Nick- bzw. Rollwinkel um einen positiven oder negativen Betrag von dem gewünschten Nick- bzw. Rollwinkel unterscheidet. Die Richtung und/oder der Betrag einer eventuellen Abweichung können dabei nicht nur aus einem Vergleich des Abtastmusters mit einem Referenzmuster gewonnen werden, sondern vorteilhafterweise auch aus im Abtastmuster selbst enthaltenen Informationen. Hierauf wird nachfolgend noch näher eingegangen.

Gemäß einer weiteren vorteilhaften Verfahrensausgestaltung werden das Abtasten des Referenzobjekts und das Verändern der Ausrichtung des Laserscanners iterativ durchgeführt, wobei insbesondere ein Inkrement, mit dem die Ausrichtung verändert wird, mit jeder Iteration verringert wird. Insbesondere dann, wenn der Betrag einer möglichen Abweichung der Ausrichtung nicht genau bekannt ist, kann durch dieses iterative Vorgehen mit abwechselndem Abtasten des Referenzobjekts und Verändern der Ausrichtung ein zügiges Herantasten an die gewünschte Ausrichtung erreicht werden.

Vorteilhafterweise ist die Form und/oder die Anordnung der Markierungen derart gewählt, dass auf der Grundlage der Anzahl der erfassten Markierungen und/oder auf der Grundlage zumindest eines vorgegebenen Charakteristikums zumindest einer der erfassten Markierungen feststellbar ist, ob die Ausrichtung des Laserscanners von der gewünschten Ausrichtung abweicht, wobei das vorgegebene Kriterium die Breite der erfassten Markierung in Richtung der Referenzlinie bzw. in Abtastrichtung und/oder die Signalhöhe der erfassten Markierung umfasst.

Es können beispielsweise alle oder ein Teil der Markierungen eine über ihre Länge variierende Breite aufweisen, so dass in Abhängigkeit davon, an welcher Stelle die Markierung von dem Abtaststrahl überstrichen wird, die Breite der erfassten Markierung variiert und somit als Kriterium insbesondere bei der Ermittlung des Betrages einer bestehenden Abweichung der Ausrichtung verwendet werden kann.

Sofern die Auflösung des Laserscanners für eine zuverlässige Bestimmung der Breite nicht ausreicht, kann auch die Signalhöhe der erfassten Markierung in dem Abtastmuster herangezogen werden, da in diesem Fall im Prinzip eine Integration der Lichtintensität über die Breite der erfassten Markierung erfolgt und somit ein näherungsweise linearer Zusammenhang zwischen der Signalhöhe und der Breite der erfassten Markierung besteht.

Weiterhin kann auch eine Abweichung der Ausrichtung anhand eines Vergleichs der Breiten bzw. Signalhöhen von zwei oder mehr erfassten Markierungen ohne Bezug auf ein Referenzmuster ermittelt werden, was der vorstehend erwähnten Auswertung von im Abtastmuster selbst enthaltenen Informationen entspricht.

Gemäß einer weiteren vorteilhaften Ausgestaltung des Verfahrens ist ein Teil der Markierungen einem Innenbereich des Referenzobjekts und ein anderer Teil der Markierungen einem zweigeteilten Außenbereich des Referenzobjekts zugeordnet, wobei die beiden Teile des Außenbereichs in Richtung der Referenzlinie betrachtet auf beiden Seiten des Innenbereichs angeordnet sind, wobei in einer ersten Stufe der Ausrichtung ausschließlich die den Innenbereich zugeordneten Markierungen berücksichtigt werden, und wobei in einer nachfolgenden zweiten Stufe der Ausrichtung ausschließlich oder zusätzlich die dem Außenbereich zugeordneten Markierungen berücksichtigt werden.

Die in den beiden Teilen des Außenbereichs vorgesehenen Markierungen besitzen einen größeren Abstand von der Mitte des Referenzobjekts als die im Innenbereich vorgesehenen Markierungen. Die Genauigkeit bei der Ausrichtung, die mit dem erfindungsgemäßen Verfahren erzielt werden kann, wird nämlich u.a. durch den Abstand der Markierungen voneinander in Richtung der Referenzlinie mitbestimmt. Je größer der Abstand zwischen den Markierungen ist, desto präziser kann eine Ausrichtung erfolgen. Wenn jedoch zu Beginn des Verfahrens eine große Abweichung insbesondere hinsichtlich des Rollwinkels besteht, ist es möglich, dass bei begrenzter Länge der Markierungen diese nicht mehr vom Abtaststrahl überstrichen werden. Dies würde zu einer Fehlinterpretation des Abtastmusters führen.

Um dem zu begegnen, wird das Verfahren zwei- oder mehrstufig durchgeführt, wobei zu Beginn nahe beieinander liegende Markierungen herangezogen werden, damit ein korrektes Überstreichen der Markierungen durch den Abtaststrahl auch bei einer großen Fehlausrichtung des Laserscanners gewährleistet ist. Nachdem in der ersten Stufe eine Grobausrichtung des Laserscanners vorgenommen wurde, kann anhand der weiter außen liegenden Markierungen in der oder den folgenden Stufen eine präzisere Ausrichtung vorgenommen werden.

Das Referenzobjekt kann einstückig ausgebildet sein und sowohl den Innenbereich als auch die beiden Außenbereiche umfassen. Alternativ ist es auch möglich, das Referenzobjekt mehrstückig auszubilden, wobei je ein Teilstück für den Innenbereich und jeden Außenbereich vorgesehen ist.

Bei dem flächigen Referenzobjekt welches von dem erfindungsgemäßen Verfahren und einer nachfolgend beschriebenen erfindungsgemäßen Laserscanneranordnung umfasst ist, sind erfindungsgemäß ein Teil der Markierungen einer ersten Gruppe und ein anderer Teil der Markierungen einer zweiten Gruppe zugeordnet sind, wobei die der ersten Gruppe zugeordneten Markierungen bezüglich der Referenzlinie und bezüglich einer senkrecht zur Referenzlinie verlaufenden Symmetrielinie auf der jeweils einen Seite und die der zweiten Gruppe zugeordnete Markierungen bezüglich der Referenzlinie und bezüglich der Symmetrielinie auf der jeweils anderen Seite angeordnet sind. Jede Gruppe weist hierbei eine oder mehrere Markierungen auf.

Die Fläche des Referenzobjekts wird also durch die Referenzlinie und durch die Symmetrielinie in eine Matrix mit 2 x 2 Feldern unterteilt, wobei die beiden Gruppen von Markierungen in zwei diagonal gegenüberliegenden Feldern angeordnet sind. In den beiden anderen, ebenfalls einander diagonal gegenüberliegenden Feldern brauchen keine Markierungen vorgesehen werden, wobei dies jedoch nicht ausgeschlossen ist. Wenn die Ausrichtung des Laserscanners mit der gewünschten Ausrichtung übereinstimmt, die durch das Referenzobjekt definiert wird, überstreicht der Abtaststrahl die Referenzlinie. Mit einem derartigen Referenzobjekt ist es möglich, zum einen zu erkennen, ob eine Abweichung hinsichtlich des Roll- oder Nickwinkels vorliegt, und zum anderen auch die Richtung einer solchen Abweichung zu ermitteln, so dass anhand des Abtastmusters eine Korrektur der Ausrichtung um eine bestimmte Achse und in eine bestimmte Richtung veranlasst werden kann.

Gemäß einer vorteilhaften Ausbildung des Referenzobjekts sind die erste Gruppe und die zweite Gruppe von Markierungen bezüglich der Form und/oder der Position der jeweiligen Markierungen punktsymmetrisch zueinander in Bezug auf den Schnittpunkt zwischen der Referenzlinie und der Symmetrielinie. Hierdurch ist eine besonders zuverlässige Auswertung des entsprechenden Abtastmusters möglich.

Vorteilhafterweise ist eine der Markierungen als Mittenmarkierung ausgestaltet, welche sich entlang der Symmetrielinie zu beiden Seiten der Referenzlinie erstreckt. Dies ermöglicht ein zuverlässiges Auffinden des Referenzobjekts und gestattet insbesondere auch eine Unterscheidung dahingehend, ob das Referenzobjekt gar nicht abgetastet wurde oder ob eine bestimmte Abweichung hinsichtlich des Rollwinkels vorliegt, bei der keine der den beiden vorstehend genannten Gruppen zugeordneten Markierungen erfasst wurde. Ohne vorhandene Mittenmarkierung würden beide Abtastmuster keinerlei erfasste Markierungen aufweisen, während im letzteren Fall bei vorhandener Mittenmarkierung diese in der Regel auch erfasst wird.

Gemäß einer weiteren vorteilhaften Ausführungsform weist zumindest ein Teil der Markierungen eine konstante Breite auf. Alternativ oder zusätzlich weist zumindest ein anderer Teil der Markierungen eine keilförmige Form auf, wobei insbesondere deren Breite mit zunehmendem Abstand von der Referenzlinie zunimmt. Die Breite bezieht sich hierbei auf die Erstreckung der Markierungen in Richtung der Referenzlinie. Grundsätzlich ist bereits bei der Verwendung von Markierungen mit konstanter Breite eine hinreichend rasche und präzise Ausrichtung des Laserscanners möglich. Bei einer Verwendung von keilförmigen Markierungen kann zumindest zum Teil eine Quantifizierung der Abweichung von der gewünschten Ausrichtung vorgenommen werden.

Gemäß einer weiteren vorteilhaften Ausführungsform weist jede Gruppe von Markierungen zumindest eine erste Markierung, deren der Referenzlinie zugewandtes Ende die Referenzlinien berührt, und zumindest eine zweite Markierung auf, deren der Referenzlinie zugewandtes Ende von der Referenzlinie beabstandet ist. Demnach sind die Längen der ersten und zweiten Markierungen so gewählt, dass die Markierungen gerade noch und die zweiten Markierungen gerade nicht mehr erfasst werden, wenn die Ausrichtung des Laserscanners der gewünschten Ausrichtung entspricht, d.h. wenn der Abtaststrahl des Laserscanners die Referenzlinie überstreicht.

Die vorliegende Erfindung betrifft ferner eine Laserscanneranordnung, welche insbesondere zur Durchführung des vorstehend beschriebenen Verfahrens ausgelegt ist, mit einem Laserscanner, einer Verstellvorrichtung, welche zum Verändern der Ausrichtung des Laserscanners zumindest um eine Nickachse und eine Rollachse ausgelegt ist, einem Referenzobjekt, insbesondere einem Referenzobjekt gemäß einer der vorstehend beschriebenen Ausgestaltungen, welches in einer Betriebskonfiguration der Laserscanneranordnung innerhalb eines Abtastbereichs des Laserscanners angeordnet ist, wobei das Referenzobjekt mehrere streifenartige, durch den Laserscanner detektierbare Markierungen aufweist, welche in der Betriebskonfiguration quer zu einer Referenzlinie verlaufen und in Richtung der Referenzlinie voneinander beabstandet sind, und einer Steuereinheit, welche ausgebildet ist, den Laserscanner zum Abtasten des Referenzobjekts anzusteuern, um ein Abtastmuster des Referenzobjekts zu erzeugen, wobei die Form und/oder die Anordnung der Markierungen derart gewählt sind, dass anhand der Gestalt des erzeugten Abtastmusters erkannt wird, ob die Ausrichtung des Laserscanners mit einer gewünschten Ausrichtung übereinstimmt, oder ob die Ausrichtung des Laserscanners von der gewünschten Ausrichtung abweicht, und ein Signal zu erzeugen, welches Informationen über eine erkannte Abweichung der Ausrichtung des Laserscanners umfasst. Die Steuereinheit kann mit dem Laserscanner verbunden sein oder in diesen integriert sein. Vorteilhafterweise umfassen die Informationen über die ermittelte Abweichung die Richtung dieser Abweichung und bevorzugt auch den Betrag dieser Abweichung, wobei insbesondere die Informationen über die ermittelte Abweichung spezifisch für die Nickachse bzw. die Rollachse vorliegen.

Gemäß einer vorteilhaften Ausführungsform der Laserscanneranordnung ist die Steuereinheit dazu ausgelegt, die Verstellvorrichtung auf der Grundlage des erzeugten Signals anzusteuern, um die Ausrichtung des Laserscanners um diejenige Achse zu verändern, für welche eine Abweichung erkannt wurde, so dass diese Abweichung vermindert oder beseitigt wird. Alternativ oder zusätzlich kann vorgesehen sein, dass die Steuereinheit dazu ausgelegt ist, auf der Grundlage des Signals eine Benutzeranweisung auszugeben, welche den Benutzer dazu auffordert, die Ausrichtung des Laserscanners um diejenige Achse zu verändern, für welche eine Abweichung erkannt wurde, so dass diese Abweichung vermindert oder beseitigt wird. Die Benutzeranweisung kann optisch und/oder akustisch ausgegeben werden. Bei einer einfache Ausgestaltung kann die Ausgabe der Benutzeranweisung auch durch eine Wiedergabe oder Darstellung des Abtastmusters erfolgen. Weitere vorteilhafte Ausführungsformen der Laseranordnung ergeben sich aus der Schilderung der vorteilhaften Verfahrensführungen und/oder aus der Schilderung der vorteilhaften Ausführungsformen des erfindungsgemäßen Referenzobjekts.

Das erfindungsgemäße Verfahren, das erfindungsgemäße Referenzobjekt, die erfindungsgemäße Laserscanneranordnung und ihre jeweiligen bevorzugten Ausgestaltungen dienen insbesondere zur Ausrichtung des Laserscanners um die Roll- und/oder Nickachse.

Die Erfindung wird nachfolgend beispielhaft unter Bezugnahme auf die Zeichnungen beschrieben. Es zeigen:
- Fig. 1: eine schematische Draufsicht einer Laserscanneranordnung mit einem Laserscanner und einem Referenzobjekt zum Ausrichten des Laserscanners;
- Fig. 2: eine Seitenansicht eines Referenzobjekts gemäß einem ersten Ausführungsbeispiel;
- Fig. 3: ein Schaubild, welches die Lage einer durch den Laserscanner erzeugten Abtastlinie bezüglich eines Referenzobjekts, ein daraus resultierendes Abtastmuster und eine erforderliche Korrektur der Ausrichtung des Laserscanners für verschiedene Fälle veranschaulicht; und
- Fig. 4: eine Seitenansicht eines Referenzobjekts gemäß einem zweiten Ausführungsbeispiel; und

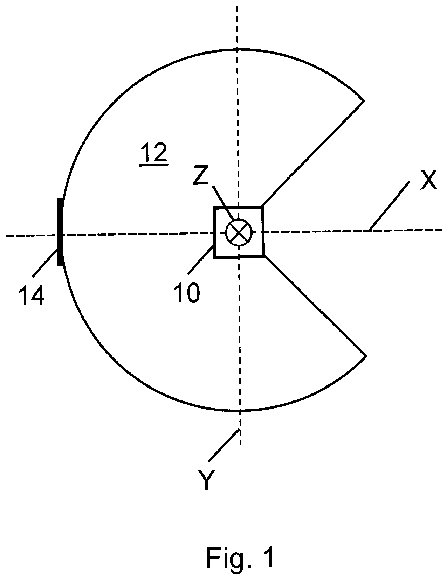

Eine erfindungsgemäße Laserscanneranordnung umfasst einen Laserscanner 10, welcher bei diesem Beispiel einen flächenförmigen Abtastbereich 12 von 270° aufweist (Fig. 1). Es handelt sich bei diesem Beispiel also um einen Einlagenscanner. Ein nachfolgend noch näher beschriebenes Referenzobjekt 14 ist mittig im Abtastbereich 12 vorgesehen.

Die Ausrichtung des Laserscanners 10 ist mittels einer Verstellvorrichtung (nicht dargestellt) zumindest um eine Nickachse Y und eine Rollachse X veränderbar. Zusätzlich kann auch eine Verstellmöglichkeit um eine senkrecht zur Zeichenebene verlaufende Gierachse oder Hochachse Z vorgesehen sein.

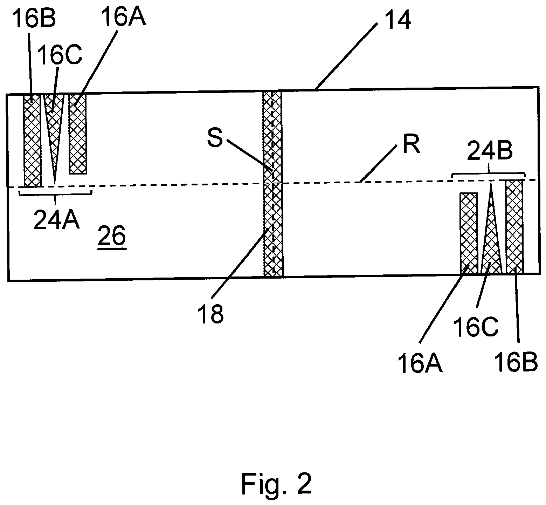

Mit Bezug auf Fig. 2 wird nachfolgend ein Referenzobjekt 14 gemäß einem ersten Ausführungsbeispiel beschrieben. Das Referenzobjekt 14 umfasst mehrere streifenförmige Markierungen 16A bis 16C, 18, die auf einem rechteckigen Träger 26 aufgebracht sind. Vorteilhafterweise ist das Reflexionsvermögen der Markierungen 16A bis 16C, 18 größer als das Reflexionsvermögen des Trägers 26, wobei das Kontrastverhältnis auch umgekehrt sein kann.

Das Referenzobjekt 14 ist in symmetrischer Weise durch eine parallel zu den langen Seiten verlaufende Referenzlinie R und eine parallel zu den kurzen Seiten verlaufende Symmetrielinie S in vier Felder unterteilt. Eine rechteckige Mittenmarkierung 18 erstreckt sich entlang der Symmetrielinie S auf beiden Seiten der Referenzlinie R.

Links der Mittenmarkierung 18 und oberhalb der Referenzlinie S ist eine erste Gruppe 24A von Markierungen vorgesehen, welche zwei rechteckige Markierungen 16A, 16B und eine zwischen diesen angeordnete keilförmige Markierung 16C umfasst. Während sich die äußere Markierung 16B bis an die Referenzlinie R erstreckt, ist die innere Markierung 16A von der Referenzlinie R beabstandet, und zwar so weit, dass sie von einem Abtaststrahl, der sich mit der Referenzlinie R deckt, gerade nicht erfasst wird. Die keilförmige Markierung 16C erstreckt sich hingegen bis an die Referenzlinie R.

Eine zweite Gruppe 24B von Markierungen ist rechts der Mittenmarkierung 18 und unterhalb der Referenzlinie R angeordnet. Die zweite Gruppe 24B von Markierungen ist punktsymmetrisch bezüglich des Schnittpunkts zwischen der Symmetrielinie S und der Referenzlinie R, d.h. die Abmessungen und Relativpositionen der Markierungen 16A bis 16C sind in beiden Gruppen 24A, 24B gleich.

Gemäß einer Abwandlung dieses Ausführungsbeispiels können die keilförmigen Markierungen 16C auch weggelassen werden, so dass die Gruppen 24A, 24B lediglich die rechteckigen Markierungen 16A, 16B umfassen.

Gemäß einer weiteren Abwandlung des Ausführungsbeispiels von Fig. 2 kann jeweils eine der rechteckigen Markierungen 16A, 16B entfallen, d.h. es ist eine rechteckige Markierung 16A oder 16B und die keilförmige Markierung 16C vorgesehen. Gemäß noch einer weiteren Abwandlung können alle rechteckigen Markierungen 16A, 16B weggelassen werden, so dass die Gruppen 24A, 24B jeweils nur die keilförmigen Markierungen 16C umfassen.

Für die Durchführung des Verfahrens wird das Referenzobjekt 14 so angeordnet, dass die Position und die Ausrichtung der Referenzlinie R zusammen mit der Position des Laserscanners 10 die gewünschte Lage des Abtastbereichs 12 im Raum festlegt. Dabei sollte eine Grobjustierung der Ausrichtung des Laserscanners 10 erfolgen, so dass sichergestellt ist, dass der Abtaststrahl das Referenzobjekt 14 erfasst.

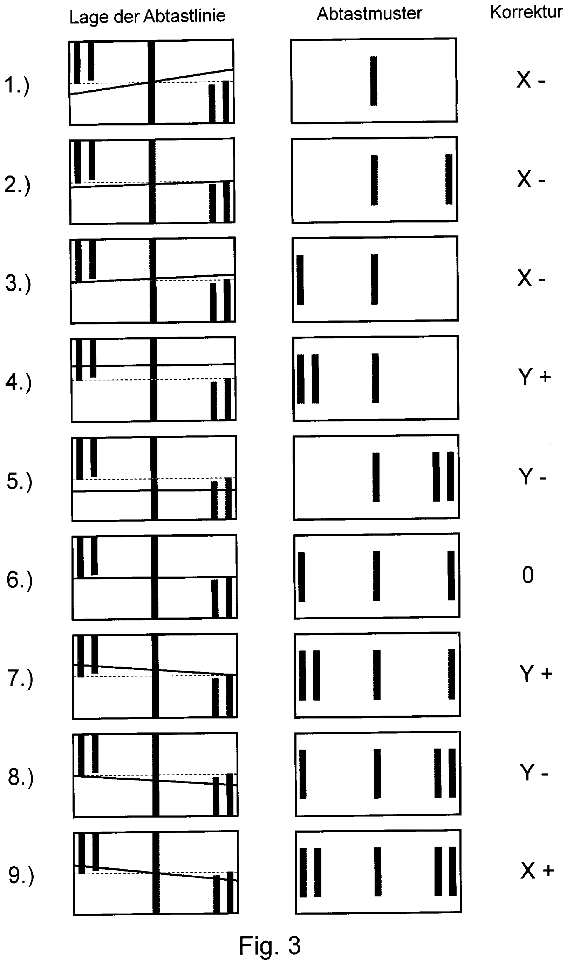

Wenn dies der Fall ist, erzeugt der Laserscanner 10 ein Abtastmuster, welches einem der in Fig. 3 dargestellten neun möglichen Abtastmuster entspricht. Die Darstellung der erfassten Markierungen in den Abtastmustern ist hier rein schematisch in Form von senkrechten Strichen wiedergegeben. Sofern das Abtastmuster keinerlei erfasste Markierungen aufweist, muss zunächst die Grobausrichtung des Laserscanners 10 angepasst werden, um sicherzustellen, dass das Referenzobjekt 14 erfasst wird.

Nachfolgend wird anhand des Schaubildes von Fig. 3 näher erläutert, auf welche Weise sich Abweichungen bei der Ausrichtung des Laserscanners von der gewünschten Ausrichtung bezüglich der Nickachse Y und/oder der Rollachse X auf das zugehörige Abtastmuster auswirken und welche Korrekturen der Ausrichtung des Laserscanners durch ein Verändern der Ausrichtung des Laserscanners um die Nickachse bzw. die Rollachse durchgeführt werden müssen. Das der Fig. 3 zugrunde liegende Referenzobjekt entspricht dem Referenzobjekt 14 von Fig. 2 ohne die keilförmigen Markierungen 16C.

Entsprechend der in Fig. 1 vorgenommenen Zuordnung des Bezugszeichens X für die Rollachse und des Bezugszeichens Y für die Nickachse symbolisiert das Symbol X in Fig. 3 ein Verstellen des Laserscanners 10 um die Rollachse, wobei das Symbol "-" ein Verstellen im Uhrzeigersinn und das Symbol "+" ein Verstellen entgegen dem Uhrzeigersinn symbolisiert. Folglich wird ein notwendiges Verstellen des Laserscanners 10 um die Nickachse Y durch das Symbol "Y" repräsentiert, wobei hier das Symbol "-" ein Verändern des Nickwinkels repräsentiert, welches einem Anheben der Abtastlinie bezogen auf die Darstellung in Fig. 3 zur Folge hat, während das Symbol "+" ein Verändern des Nickwinkels repräsentiert, welches ein Absenken der Abtastlinie zur Folge hat.

Wenn der Laserscanner 10 korrekt ausgerichtet ist, überdeckt die Abtastlinie die in dem Schaubild von Fig. 3 gestrichelt dargestellte Referenzlinie, wie dies im Fall 6 dargestellt ist. Dabei werden nur die äußeren langen Markierungen 16B sowie die Mittenmarkierung 18 überstrichen (vgl. Fig. 2). Eine Korrektur ist nicht erforderlich, was durch das Symbol "0" repräsentiert wird.

In den Fällen 1 bis 3 liegt zumindest eine Fehlausrichtung bezüglich der Rollachse X vor, wobei hier der Rollwinkel zu groß eingestellt ist. Wenn demnach ein Abtastmuster gemäß den Fällen 1 bis 3 detektiert wurde, wird eine Verminderung des Rollwinkels X vorgenommen. Eine etwaige zusätzliche Fehlausrichtung bezüglich der Nickachse Y, wie sie in den Fällen 2 und 3 vorliegt, wird zunächst nicht berücksichtigt.

In den Fällen 4 und 5 liegt eine Fehlausrichtung bezüglich der Nickachse Y vor. Wenn wie im Fall 4 die Abtastlinie oberhalb der Referenzlinie liegt, muss der Nickwinkel vergrößert werden, wenn die Abtastlinie unterhalb der Referenzlinie liegt (Fall 5), muss der Nickwinkel verkleinert werden. Bei Fehlausrichtungen, die zu den Abtastmustern gemäß den Fällen 4 und 5 führen, kann zusätzlich zu der Fehlausrichtung bezüglich der Nickachse gleichzeitig auch eine Fehlausrichtung bezüglich der Rollachse X vorliegen, so dass die Abtastlinien nicht - wie in Fig. 3 dargestellt - waagerecht verlaufen, sondern leicht schräg. Eine solche Fehlausrichtung bezüglich der Rollachse X bleibt zunächst unberücksichtigt.

Wenn die oben erwähnte zusätzliche Fehlausrichtung bezüglich der Rollachse X etwas größer ausfällt, kann dies dazu führen, dass im Vergleich zu den Abtastmustern der Fälle 4 und 5 jeweils eine weitere Markierung detektiert wird, was den Fällen 7 und 8 entspricht. Auch in diesen Fällen wird zunächst die Fehlausrichtung bezüglich der Nickachse Y durch Vergrößern des Nickwinkels (Fall 7) bzw. durch Verkleinern des Nickwinkels (Fall 8) korrigiert. Erst wenn keine Fehlausrichtung bezüglich der Nickachse Y mehr festgestellt wird, erfolgt eine Korrektur einer gegebenenfalls vorliegenden Abweichung bezüglich der Rollachse X.

Im Fall 9 erfasst die Abtastlinie schließlich alle fünf Markierungen, so dass im Abtastmuster ebenfalls fünf Striche vorhanden sind. Wie aus dem entsprechenden Teilschaubild von Fig. 3 ersichtlich ist, ist die Erfassung von fünf Markierungen auch dann möglich, wenn zusätzlich zu der Abweichung bezüglich der Rollachse X auch eine Abweichung bezüglich der Nickachse Y vorliegt. Auch in diesem Fall wird eine Korrektur des Nickwinkels so lange zurückgestellt, bis hinsichtlich des Rollwinkels eine Übereinstimmung mit der gewünschten Ausrichtung erreicht wurde.

Sofern bei den vorstehend erläuterten Fällen Abweichungen sowohl bezüglich des Rollwinkels als auch bezüglich des Nickwinkels vorliegen, wird in Abhängigkeit von dem Abtastmuster zunächst nur eine Winkelabweichung korrigiert. Wenn dies erfolgt ist, ändert sich das Abtastmuster zu einem Abtastmuster gemäß einem der für die andere Winkelabweichung charakteristischen Fälle, so dass darauf basierend auch diese Abweichung korrigiert werden kann.

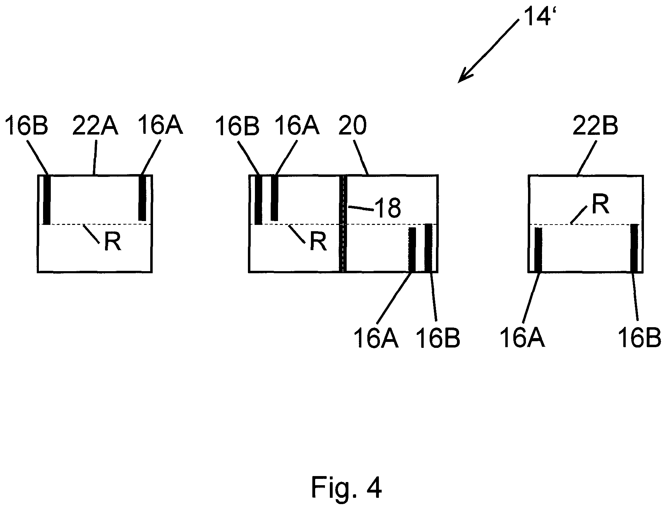

Mit Bezug auf Fig. 4 wird nachfolgend nun ein weiteres Ausführungsbeispiel für ein erfindungsgemäßes Referenzobjekt 14' erläutert. Das Referenzobjekt 14' ist dreiteilig ausgeführt mit einem Innenbereich 20, der dem Referenzobjekt 14 von Fig. 2 entspricht, sowie zwei Außenbereichen 22A, 22B, welche von dem Innenbereich 20 beabstandet angeordnet sind und jeweils zwei Markierungen 16A, 16B aufweisen, die den Markierungen 16A, 16B des Referenzobjekts 14 entsprechen. Bei der Anordnung der Außenbereiche 22A, 22B ist darauf zu achten, dass deren Referenzlinien R mit der Referenzlinie R des Innenbereichs 20 fluchten. Die Markierungen 16B der Außenbereiche 22A, 22B erstrecken sich bis an die Referenzlinie R, während die Markierungen 16A so weit von der Referenzlinie R beabstandet sind, dass ein Abtaststrahl, der das Referenzobjekt 14' entlang der Referenzlinie R abtastet, die Markierungen 16A der Außenbereiche 22A, 22B ebenfalls nicht erfasst.

Die Ausrichtung des Laserscanners 10 erfolgt in einem zweistufigen Verfahren, wobei die erste Stufe dem mit Bezug auf Fig. 2 und 3 beschriebenen Verfahren entspricht, wobei hierbei nur die Markierungen 16A, 16B, 18 des Innenbereichs 20 berücksichtigt werden.

Um die Genauigkeit zu verbessern, werden in einer zweiten Stufe zusätzlich auch die Außenbereiche 22A, 22B berücksichtigt, wobei sinnvollerweise anstelle der Markierungen 16A, 16B des Innenbereichs 20 nur die Markierungen 16A, 16B der Außenbereiche 22A, 22B berücksichtigt werden.

Da die Breite des Abtaststrahls mit zunehmender Entfernung des Referenzobjekts 14 von dem Laserscanner 10 aufgrund der Strahldivergenz zunehmen kann, kann es bei beiden Ausführungsbeispielen (Fig. 2 und 4) gegebenenfalls erforderlich sein, den Abstand der Markierungen 16A von der Referenzlinie R und gegebenenfalls auch den Abstand der Markierungen 16B, 16C von der Referenzlinie R an die Entfernung anzupassen. Dies kann beispielsweise dadurch erfolgen, dass die der Referenzlinie R zugewandten Endbereiche der Markierungen 16A, 16B, 16C mit Hilfe von nicht reflektierendem Material abgeklebt werden. Um eine korrekte Abdeckung zu gewährleisten, können auf dem Referenzobjekt 14, 14' die abzuklebenden Bereiche der Markierungen 16A, 16B, 16C durch entsprechende entfernungsspezifische Hilfsmarkierungen gekennzeichnet sein.

Die Ausrichtung des Laserscanners 10 kann manuell erfolgen, indem auf dem Abtastmuster beruhende Benutzeranweisungen ausgegeben werden und ein Benutzer mittels der Verstellvorrichtung die entsprechenden Veränderungen der Ausrichtung durchführt. Im einfachsten Fall können die Benutzeranweisungen darin bestehen, dass das Abtastmuster mittels einer geeigneten Anzeigevorrichtung wiedergegeben wird.

Weiterhin ist es möglich, mittels einer mit dem Laserscanner verbundenen Auswerteeinrichtung das Abtastmuster zu analysieren und gemäß den mit Bezug auf Fig. 3 erläuterten Zusammenhängen darauf beruhende Korrekturanweisungen zur Verstellung des Nickwinkels bzw. des Rollwinkels auszugeben, wobei diese Anweisungen zumindest auch Informationen über die Richtung der Veränderung enthalten sollten. Sofern eine quantitative Auswertung der Abtastmuster möglich ist, beispielweise auf der Grundlage der keilförmigen Markierungen 16C, kann die Benutzeranweisung auch Informationen über das Maß der notwendigen Verstellungen umfassen. Die Ausgabe der Benutzeranweisungen kann optisch und/oder akustisch erfolgen.

In einer weiteren Variante ist die Verstellvorrichtung für eine automatische Verstellung ausgelegt und mit der Auswerteeinheit verbunden, so dass von der Auswerteeinheit ermittelte erforderliche Verstellbewegungen an die Verstellvorrichtung übermittelt und von dieser ausgeführt werden.

Anstelle der vorgefertigten Referenzobjekte 14, 14' können grundsätzlich auch individuell hergestellte Referenzobjekte verwendet werden, beispielsweise, indem die notwendigen Markierungen temporär an einem ortsfesten Gegenstand, beispielsweise einer Wand, am Aufstellort des Laserscanners angebracht werden.

### Bezugszeichenliste

- 10: Laserscanner
- 12: Abtastbereich
- 14, 14': Referenzobjekt
- 16A - 16C: Markierung
- 20: Innenbereich
- 22A, 22B: Außenbereich
- 24A, 24B: Gruppe von Markierungen
- 26: Träger

- R: Referenzlinie
- S: Symmetrielinie
- X: Rollachse
- Y: Nickachse
- Z: Hochachse

## Patentansprüche

1. Verfahren zum Ausrichten eines Laserscanners (10), dessen Ausrichtung mittels einer Verstellvorrichtung zumindest um eine Nickachse (Y) und eine Rollachse (X) veränderbar ist, bei dem:
- ein Referenzobjekt (14, 14') innerhalb eines Abtastbereiches des Laserscanners (10) angeordnet wird, wobei das Referenzobjekt (14, 14') mehrere streifenartige, durch den Laserscanner detektierbare Markierungen (16A - 16C, 18) aufweist, welche quer zu einer Referenzlinie (R) verlaufen, so dass die Markierungen (16A - 16C, 18) senkrecht zu der Referenzlinie (R) verlaufen oder eine Abweichung von einem senkrechten Verlauf nicht mehr als 20° beträgt, und in Richtung der Referenzlinie (R) voneinander beabstandet sind,
- das Referenzobjekt (14, 14') mittels des Laserscanners (10) abgetastet wird, um ein Abtastmuster des Referenzobjekts (14, 14') zu erzeugen, wobei die Form und/oder die Anordnung der Markierungen (16A - 16C, 18) derart gewählt sind, dass anhand der Gestalt des erzeugten Abtastmusters erkannt wird, ob die Ausrichtung des Laserscanners (10) mit einer gewünschten Ausrichtung übereinstimmt, oder ob die Ausrichtung des Laserscanners (10) von der gewünschten Ausrichtung abweicht, und
- die Ausrichtung des Laserscanners (10) auf der Grundlage einer erkannten Abweichung der Ausrichtung verändert wird,
**dadurch gekennzeichnet,**
**dass** ein Teil der Markierungen (16A - 16C, 18) einer ersten Gruppe (24A) und ein anderer Teil der Markierungen (16A - 16C, 18) einer zweiten Gruppe (24B) zugeordnet sind,
**dass** die der ersten Gruppe (24A) zugeordneten Markierungen (16A - 16C, 18) bezüglich der Referenzlinie (R) und bezüglich einer senkrecht zur Referenzlinie (R) verlaufenden Symmetrielinie (S) auf der jeweils einen Seite und die der zweiten Gruppe (24B) zugeordneten Markierungen (16A - 16C, 18) bezüglich der Referenzlinie (R) und bezüglich der Symmetrielinie (S) auf der jeweils anderen Seite angeordnet sind, und
die Form und/oder die Anordnung der Markierungen (16A - 16C, 18) derart gewählt sind, dass anhand der Gestalt des Abtastmusters erkannt wird, ob die Ausrichtung des Laserscanners (10) bezüglich der Nickachse (Y) und/oder bezüglich der Rollachse (X) von der gewünschten Ausrichtung abweicht, wobei die Ausrichtung des Laserscanners (10) um diejenige Achse (X, Y) verändert wird, für welche eine Abweichung erkannt wurde, so dass diese Abweichung vermindert oder beseitigt wird.

2. Verfahren nach Anspruch 1,
**dadurch gekennzeichnet,**
**dass** anhand der Gestalt des Abtastmusters auch die Richtung der erkannten Abweichung und bevorzugt auch der Betrag dieser Abweichung erkannt und insbesondere bei dem Verändern der Ausrichtung des Laserscanners (10) berücksichtigt wird.

3. Verfahren nach Anspruch 1 oder 2,
**dadurch gekennzeichnet,**
**dass** das Abtasten des Referenzobjekts (14, 14') und das Verändern der Ausrichtung des Laserscanners (10) iterativ durchgeführt werden, wobei insbesondere ein Inkrement, mit dem die Ausrichtung verändert wird, mit jeder Iteration verringert wird.

4. Verfahren nach einem der vorhergehenden Ansprüche,
**dadurch gekennzeichnet,**
**dass** die Form und/oder die Anordnung der Markierungen (16A - 16C, 18) derart gewählt ist, dass auf der Grundlage der Anzahl der erfassten Markierungen und/oder auf der Grundlage zumindest eines vorgegebenen Charakteristikums zumindest einer der erfassten Markierungen feststellbar ist, ob die Ausrichtung des Laserscanners (10) von der gewünschten Ausrichtung abweicht, wobei das vorgegebene Kriterium die Breite der erfassten Markierung in Richtung der Referenzlinie und/oder die Signalhöhe der erfassten Markierung umfasst.

5. Verfahren nach einem der vorhergehenden Ansprüche,
**dadurch gekennzeichnet,**
**dass** ein Teil der Markierungen (16A - 16C, 18) einem Innenbereich (20) des Referenzobjekts (14, 14') und ein anderer Teil der Markierungen (16A, 16B) einem zweigeteilten Außenbereich (22A, 22B) des Referenzobjekts (14, 14') zugeordnet ist, wobei die beiden Teile des Außenbereichs (22A, 22B) in Richtung der Referenzlinie betrachtet auf beiden Seiten des Innenbereichs (20) angeordnet sind,
**dass** in einer ersten Stufe der Ausrichtung ausschließlich die dem Innenbereich (20) zugeordneten Markierungen (16A - 16C, 18) berücksichtigt werden, und
**dass** in einer nachfolgenden zweiten Stufe der Ausrichtung ausschließlich oder zusätzlich die dem Außenbereich (22A, 22B) zugeordneten Markierungen (16A, 16B) berücksichtigt werden.

6. Verfahren nach einem der vorhergehenden Ansprüche,
**dadurch gekennzeichnet,**
**dass** die erste Gruppe (24A) und die zweite Gruppe (24B) von Markierungen (16A - 16C, 18) bezüglich der Form und/oder der Position der jeweiligen Markierungen (16A - 16C, 18) rotationssymmetrisch zueinander in Bezug auf den Schnittpunkt zwischen der Referenzlinie (R) und der Symmetrielinie (S) sind.

7. Verfahren nach einem der vorhergehenden Ansprüche,
**dadurch gekennzeichnet,**
**dass** eine der Markierungen (16A - 16C, 18) als Mittenmarkierung (18) ausgestaltet ist, welche sich entlang der Symmetrielinie (S) zu beiden Seiten der Referenzlinie (R) erstreckt.

8. Verfahren nach einem der vorhergehenden Ansprüche,
**dadurch gekennzeichnet,**
**dass** zumindest ein erster Teil der Markierungen (16A, 16B, 18) eine konstante Breite aufweist und/oder
**dass** zumindest ein zweiter Teil der Markierungen (16C) eine keilförmige Form aufweist, wobei insbesondere deren Breite mit zunehmendem Abstand von der Referenzlinie (R) zunimmt.

9. Verfahren nach einem der vorhergehenden Ansprüche,
**dadurch gekennzeichnet,**
**dass** jede Gruppe (24A, 24B) von Markierungen (16A - 16C, 18) zumindest eine erste Markierung (16B), deren der Referenzlinie (R) zugewandtes Ende die Referenzlinie (R) berührt, und zumindest eine zweite Markierung (16A) aufweist, deren der Referenzlinie (R) zugewandtes Ende von der Referenzlinie (R) beabstandet ist.

10. Laserscanneranordnung, welche insbesondere zur Durchführung des Verfahrens nach einem der Ansprüche 1 bis 9 ausgelegt ist, mit
einem Laserscanner (10),
einer Verstellvorrichtung, welche zum Verändern der Ausrichtung des Laserscanners (10) zumindest um eine Nickachse (Y) und eine Rollachse (X) ausgelegt ist,
einem Referenzobjekt (14, 14'), welches in einer Betriebskonfiguration der Laserscanneranordnung innerhalb eines Abtastbereiches des Laserscanners (10) angeordnet ist, wobei das Referenzobjekt (14, 14') mehrere streifenartige, durch den Laserscanner (10) detektierbare Markierungen (16A - 16C, 18) aufweist, welche in der Betriebskonfiguration quer zu einer Referenzlinie (R) verlaufen, so dass die Markierungen (16A - 16C, 18) senkrecht zu der Referenzlinie (R) verlaufen oder eine Abweichung von einem senkrechten Verlauf nicht mehr als 20° beträgt, und in Richtung der Referenzlinie (R) voneinander beabstandet sind, und
einer Steuereinheit, welche ausgebildet ist,
- den Laserscanner (10) zum Abtasten des Referenzobjekts (14, 14') anzusteuern, um ein Abtastmuster des Referenzobjekts (14, 14') zu erzeugen, wobei die Form und/oder die Anordnung der Markierungen (16A - 16C, 18) derart gewählt sind, dass anhand der Gestalt des erzeugten Abtastmusters erkannt wird, ob die Ausrichtung des Laserscanners (10) mit einer gewünschten Ausrichtung übereinstimmt, oder ob die Ausrichtung des Laserscanners (10) von der gewünschten Ausrichtung abweicht, und
- ein Signal zu erzeugen, welches Informationen über eine erkannte Abweichung der Ausrichtung des Laserscanners (10) umfasst,
**dadurch gekennzeichnet,**
**dass** ein Teil der Markierungen (16A - 16C, 18) einer ersten Gruppe (24A) und ein anderer Teil der Markierungen (16A - 16C, 18) einer zweiten Gruppe (24B) zugeordnet sind,
**dass** die der ersten Gruppe (24A) zugeordneten Markierungen (16A - 16C, 18) bezüglich der Referenzlinie (R) und bezüglich einer senkrecht zur Referenzlinie (R) verlaufenden Symmetrielinie (S) auf der jeweils einen Seite und die der zweiten Gruppe (24B) zugeordneten Markierungen (16A - 16C, 18) bezüglich der Referenzlinie (R) und bezüglich der Symmetrielinie (S) auf der jeweils anderen Seite angeordnet sind,
**dass** die Form und/oder die Anordnung der Markierungen (16A - 16C, 18) derart gewählt sind, dass anhand der Gestalt des Abtastmusters erkannt wird, ob die Ausrichtung des Laserscanners (10) bezüglich der Nickachse (Y) und/oder bezüglich der Rollachse (X) von der gewünschten Ausrichtung abweicht, und
**dass** die Steuereinheit dazu ausgelegt ist, die Verstellvorrichtung auf der Grundlage des erzeugten Signals anzusteuern, um die Ausrichtung des Laserscanners (10) um diejenige Achse (X, Y) zu verändern, für welche eine Abweichung erkannte wurde, so dass diese Abweichung vermindert oder beseitigt wird, und/oder
**dass** die Steuereinheit dazu ausgelegt ist, auf der Grundlage des Signals eine Benutzeranweisung auszugeben, welche einen Benutzer dazu auffordert, die Ausrichtung des Laserscanners (10) um diejenige Achse (X, Y) zu verändern, für welche eine Abweichung erkannte wurde, so dass diese Abweichung vermindert oder beseitigt wird.

## Claims

1. A method of aligning a laser scanner (10) whose alignment can at least be changed about a pitch axis (Y) and a roll axis (X) by means of an adjustment apparatus, in which:
- a reference object (14, 14') is arranged within a scanning zone of the laser scanner (10), with the reference object (14, 14') having a plurality of strip-like markings (16A - 16C, 18) which are detectable by the laser scanner and which run transversely to a reference line (R) such that the markings (16A - 16C, 18) run perpendicular to the reference line (R) or a deviation from the perpendicular amounts to no more than 20° and are spaced apart from one another in the direction of the reference line (R);
- the reference object (14, 14') is scanned by means of the laser scanner (10) to generate a scanning pattern of the reference object (14, 14'), with the shape and/or the arrangement of the markings (16A - 16C, 18) being selected such that it is recognized based on the design of the generated scanning pattern whether the alignment of the laser scanner (10) corresponds to a desired alignment or whether the alignment of the laser scanner (10) deviates from the desired alignment; and
- the alignment of the laser scanner (10) is changed on the basis of a recognized deviation of the alignment,
**characterized in that**
some of the markings (16A - 16C, 18) are associated with a first group (24A) and other ones of the markings (16A - 16C, 18) are associated with a second group (24B);
**in that** the markings (16A - 16C, 18) associated with the first group (24A) are arranged at the respective one side with respect to the reference line (R) and with respect to a line of symmetry (S) running perpendicular to the reference line (R) and the markings (16A - 16C, 18) associated with the second group (24B) are arranged at the respective other side with respect to the reference line (R) and with respect to the line of symmetry (S); and **in that** the shape and/or the arrangement of the markings (16A - 16C, 18) is/are selected such that it is recognized based on the design of the scanning pattern whether the alignment of the laser scanner (10) deviates from the desired alignment with respect to the pitch axis (Y) and/or with respect to the roll axis (X), with the alignment of the laser scanner (10) being changed about that axis (X, Y) for which a deviation was recognized so that this deviation is reduced or eliminated.

2. A method in accordance with claim 1,
**characterized in that**
the direction of the recognized deviation, and preferably also the amount of this deviation, is also recognized based on the design of the scanning pattern and is in particular taken into account in the changing of the alignment of the laser scanner (10).

3. A method in accordance with claim 1 or claim 2,
**characterized in that**
the scanning of the reference object (14, 14') and the changing of the alignment of the laser scanner (10) are carried out iteratively,
with an increment by which the alignment is changed in particular being reduced with each iteration.

4. A method in accordance with any one of the preceding claims, **characterized in that**
the shape and/or the arrangement of the markings (16A - 16C, 18) is/are selected such that it can be determined, on the basis of the number of detected markings and/or on the basis of at least one predefined characteristic of at least one of the detected markings, whether the alignment of the laser scanner (10) deviates from the desired alignment, with the predefined criterion comprising the width of the detected marking in the direction of the reference line and/or the signal level of the detected marking.

5. A method in accordance with any one of the preceding claims,
**characterized in that**
some of the markings (16A - 16C, 18) are associated with an inner region (20) of the reference object (14, 14') and other ones of the markings (16A, 16B) are associated with a two-part outer region (22A, 22B) of the reference object (14, 14'), with the two parts of the outer region (22A, 22B) being arranged at both sides of the inner region (20) viewed in the direction of the reference line;
**in that** only the markings (16A - 16C, 18) associated with the inner region (20) are taken into account in a first stage of the alignment; and
**in that** only or additionally the markings (16A, 16B) associated with the outer region (22A, 22B) are taken into account in a subsequent second stage of the alignment.

6. A method in accordance with any one of the preceding claims,
**characterized in that**,
with respect to the shape and/or the position of the respective markings (16A - 16C, 18), the first group (24A) and the second group (24B) of markings (16A - 16C, 18) are rotationally symmetrical to one another with respect to the point of intersection between the reference line (R) and the line of symmetry (S).

7. A method in accordance with any one of the preceding claims,
**characterized in that**
one of the markings (16A - 16C, 18) is designed as a central marking (18) which extends along the line of symmetry (S) at both sides of the reference line (R).

8. A method in accordance with any one of the preceding claims,
**characterized in that**
at least a first portion of the markings (16A, 16B, 18) has a constant width; and/or
**in that** at least a second portion of the markings (16C) has a wedge-like shape, with their width in particular increasing as the distance from the reference line (R) increases.

9. A method in accordance with any one of the preceding claims,
**characterized in that**
each group (24A, 24B) of markings (16A - 16C, 18) has at least one first marking (16B) whose end facing the reference line (R) contacts the reference line (R) and at least one second marking (16A) whose end facing the reference line (R) is spaced apart from the reference line (R).

10. A laser scanner arrangement which is in particular adapted to carry out the method in accordance with any one of the claims 1 to 9, comprising
a laser scanner (10);
an adjustment apparatus which is adapted to at least change the alignment of the laser scanner (10) about a pitch axis (Y) and a roll axis (X);
a reference object (14, 14') which is arranged within a scanning zone of the laser scanner (10) in an operating configuration of the laser scanner arrangement, with the reference object (14, 14') having a plurality of strip-like markings (16A - 16C, 18) which are detectable by the laser scanner (10) and which run transversely to a reference line (R) in the operating configuration such that the markings (16A - 16C, 18) run perpendicular to the reference line (R) or a deviation from the perpendicular amounts to no more than 20° and are spaced apart from one another in the direction of the reference line (R); and
a control unit which is configured
- to control the laser scanner (10) to scan the reference object (14, 14') in order to generate a scanning pattern of the reference object (14, 14'), with the shape and/or the arrangement of the markings (16A - 16C, 18) being selected such that it is recognized based on the design of the generated scanning pattern whether the alignment of the laser scanner (10) corresponds to a desired alignment or whether the alignment of the laser scanner (10) deviates from the desired alignment and
- to generate a signal which comprises information about a recognized deviation of the alignment of the laser scanner (10),
**characterized in that**
some of the markings (16A - 16C, 18) are associated with a first group (24A) and other ones of the markings (16A - 16C, 18) are associated with a second group (24B);
**in that** the markings (16A - 16C, 18) associated with the first group (24A) are arranged at the respective one side with respect to the reference line (R) and with respect to a line of symmetry (S) running perpendicular to the reference line (R) and the markings (16A - 16C, 18) associated with the second group (24B) are arranged at the respective other side with respect to the reference line (R) and with respect to the line of symmetry (S);
**in that** the shape and/or the arrangement of the markings (16A - 16C, 18) is/are selected such that it is recognized based on the design of the scanning pattern whether the alignment of the laser scanner (10) deviates from the desired alignment with respect to the pitch axis (Y) and/or with respect to the roll axis (X);
**in that** the control unit is adapted to control the adjustment apparatus on the basis of the generated signal in order to change the alignment of the laser scanner (10) about that axis (X, Y) for which a deviation was recognized so that this deviation is reduced or eliminated; and/or
**in that** the control unit is adapted to output a user instruction on the basis of the signal which prompts a user to change the alignment of the laser scanner (10) about that axis (X, Y) for which a deviation was recognized so that this deviation is reduced or eliminated.

## Revendications

1. Procédé d'alignement d'un scanneur laser (10) dont l'alignement peut être modifié au moins autour d'un axe de tangage (Y) et d'un axe de roulis (X) à l'aide d'un dispositif de réglage, dans lequel :
- un objet de référence (14, 14') est disposé à l'intérieur d'une zone de balayage du scanneur laser (10), l'objet de référence (14, 14') comportant plusieurs repères (16A - 16C, 18) en forme de bande qui peuvent être détectés par le scanneur laser et qui s'étendent transversalement à une ligne de référence (R), de sorte que les repères (16A - 16C, 18) s'étendent perpendiculairement à la ligne de référence (R) ou qu'un écart par rapport à un tracé perpendiculaire n'est pas supérieur à 20°, et sont espacés les uns des autres dans la direction de la ligne de référence (R),
- l'objet de référence (14, 14') est balayé à l'aide du scanneur laser (10) pour générer un motif de balayage de l'objet de référence (14, 14'), la forme et/ou la disposition des repères (16A - 16C, 18) étant choisie(s) de telle sorte qu'il est reconnu, à partir de la configuration du motif de balayage généré, si l'alignement du scanneur laser (10) coïncide avec un alignement souhaité, ou si l'alignement du scanneur laser (10) s'écarte de l'alignement souhaité, et
- l'alignement du scanneur laser (10) est modifié en fonction d'un écart reconnu de l'alignement,
**caractérisé en ce que**
une partie des repères (16A - 16C, 18) est associée à un premier groupe (24A) et une autre partie des repères (16A - 16C, 18) est associée à un second groupe (24B),
**en ce que** les des repères (16A - 16C, 18) associés au premier groupe (24A) sont disposés sur un côté respectif par rapport à la ligne de référence (R) et par rapport à une ligne de symétrie (S) perpendiculaire à la ligne de référence (R), et les repères (16A - 16C, 18) associés au second groupe (24B) sont disposés sur l'autre côté respectif par rapport à la ligne de référence (R) et par rapport à la ligne de symétrie (S), et **en ce que** la forme et/ou la disposition des repères (16A - 16C, 18) sont choisies de telle sorte qu'il est reconnu, à partir de la configuration du motif de balayage, si l'alignement du scanneur laser (10) par rapport à l'axe de tangage (Y) et/ou par rapport à l'axe de roulis (X) s'écarte de l'alignement souhaité, l'alignement du scanneur laser (10) étant modifié autour de cet axe (X, Y) pour lequel un écart a été reconnu, de sorte que cet écart est réduit ou supprimé.

2. Procédé selon la revendication 1,
**caractérisé en ce que**
en fonction de la configuration du motif de balayage, la direction de l'écart reconnu et de préférence également le montant de cet écart sont reconnus et en particulier pris en compte lors de la modification de l'alignement du scanneur laser (10).

3. Procédé selon la revendication 1 ou 2,
**caractérisé en ce que**
le balayage de l'objet de référence (14, 14') et la modification de l'alignement du scanneur laser (10) sont effectués de façon itérative, et
en particulier un incrément avec lequel l'alignement est modifié est réduit à chaque itération.

4. Procédé selon l'une des revendications précédentes,
**caractérisé en ce que**
la forme et/ou la disposition des repères (16A - 16C, 18) sont choisies de telle sorte qu'il est constatable, à partir du nombre de repères détectés et/ou à partir d'au moins une caractéristique prédéterminée de l'au moins des repères détectés, si l'alignement du scanneur laser (10) s'écarte de l'alignement souhaité, le critère prédéterminé comprenant la largeur du repère détecté en direction de la ligne de référence et/ou le niveau de signal du repère détecté.

5. Procédé selon l'une des revendications précédentes,
**caractérisé en ce que**
une partie des repères (16A - 16C, 18) est associée à une zone intérieure (20) de l'objet de référence (14, 14'), et une autre partie des repères (16A, 16B) est associée à une zone extérieure (22A, 22B) subdivisée en deux de l'objet de référence (14, 14'), les deux parties de la zone extérieure (22A, 22B), vues en direction de la ligne de référence, étant disposées de part et d'autre de la zone intérieure (20),
**en ce que** dans une première étape de l'alignement, exclusivement les repères (16A - 16C, 18) associés à la zone intérieure (20) sont pris en compte, et
**en ce que** dans une seconde étape successive de l'alignement, exclusivement ou additionnellement les repères (16A, 16B) associés à la zone extérieure (22A, 22B) sont pris en compte.

6. Procédé selon l'une des revendications précédentes,
**caractérisé en ce que**
le premier groupe (24A) et le second groupe (24B) de repères (16A - 16C, 18) sont mutuellement à symétrie de révolution en ce qui concerne la forme et/ou la position des repères respectifs (16A - 16C, 18), par rapport à l'intersection entre la ligne de référence (R) et la ligne de symétrie (S).

7. Procédé selon l'une des revendications précédentes,
**caractérisé en ce que**
l'un des repères (16A - 16C, 18) est conçu sous forme de repère central (18) qui s'étend le long de la ligne de symétrie (S) de part et d'autre de la ligne de référence (R).

8. Procédé selon l'une des revendications précédentes,
**caractérisé en ce que**
une première partie au moins des repères (16A, 16B, 18) présente une largeur constante, et/ou
une seconde partie au moins des repères (16C) présente une forme en coin, leur largeur augmentant en particulier au fur et à mesure de l'augmentation de la distance par rapport à la ligne de référence (R).

9. Procédé selon l'une des revendications précédentes,
**caractérisé en ce que**
chaque groupe (24A, 24B) de repères (16A - 16C, 18) présente au moins un premier repère (16B) dont l'extrémité tournée vers la ligne de référence (R) touche la ligne de référence (R), et au moins un second repère (16A) dont l'extrémité tournée vers la ligne de référence (R) est espacée de la ligne de référence (R).

10. Ensemble de scanneur laser conçu en particulier pour la mise en oeuvre du procédé selon l'une des revendications 1 à 9, comportant
un scanneur laser (10),
un dispositif de réglage qui est conçu pour modifier l'alignement du scanneur laser (10) au moins autour d'un axe de tangage (Y) et d'un axe de roulis (X),
un objet de référence (14, 14') qui, en configuration de fonctionnement de l'ensemble de scanneur laser, est disposé à l'intérieur d'une zone de balayage du scanneur laser (10), l'objet de référence (14, 14') comportant plusieurs repères (16A - 16C, 18) en forme de bande qui peuvent être détectés par le scanneur laser (10) et qui, dans la configuration de fonctionnement, s'étendent transversalement à une ligne de référence (R), de sorte que les repères (16A - 16C, 18) s'étendent perpendiculairement à la ligne de référence (R) ou qu'un écart par rapport à un tracé perpendiculaire n'est pas supérieur à 20°, et sont espacés les uns des autres dans la direction de la ligne de référence (R), et
une unité de commande qui est réalisée pour
- piloter le scanneur laser (10) pour balayer l'objet de référence (14, 14'), afin de générer un motif de balayage de l'objet de référence (14, 14'), la forme et/ou la disposition des repères (16A - 16C, 18) étant choisie(s) de telle sorte qu'il est reconnu, à partir de la configuration du motif de balayage généré, si l'alignement du scanneur laser (10) coïncide avec un alignement souhaité ou si l'alignement du scanneur laser (10) s'écarte de l'alignement souhaité, et
- générer un signal qui comprend des informations relatives à un écart reconnu de l'alignement du scanneur laser (10),
**caractérisé en ce que**
une partie des repères (16A - 16C, 18) est associée à un premier groupe (24A) et une autre partie des repères (16A - 16C, 18) est associée à un second groupe (24B),
**en ce que** les repères (16A - 16C, 18) associés au premier groupe (24A) sont disposées sur un côté respectif par rapport à la ligne de référence (R) et par rapport à une ligne de symétrie (S) perpendiculaire à la ligne de référence (R), et les repères (16A - 16C, 18) associés au second groupe (24B) sont disposés sur l'autre côté respectif par rapport à la ligne de référence (R) et par rapport à la ligne de symétrie (S),
**en ce que** la forme et/ou la disposition des repères (16A - 16C, 18) sont choisies de telle sorte qu'il est reconnu, à partir de la configuration du motif de balayage, si l'alignement du scanneur laser (10) par rapport à l'axe de tangage (Y) et/ou par rapport à l'axe de roulis (X) s'écarte de l'alignement souhaité, et
**en ce que** l'unité de commande est conçue pour piloter le dispositif de réglage en fonction du signal généré, afin de modifier l'alignement du scanneur laser (10) autour de cet axe (X, Y) pour lequel un écart a été reconnu, de sorte que cet écart est réduit ou supprimé, et/ou
**en ce que** l'unité de commande est conçue pour émettre une instruction pour l'utilisateur en fonction du signal, instruction qui invite un utilisateur à modifier l'alignement du scanneur laser (10) autour de cet axe (X, Y) pour lequel un écart a été reconnu, de sorte que cet écart est réduit ou supprimé.
